# EUROPÄISCHE PATENTANMELDUNG

(11) **EP 1 298 901 A2**
(43) Veröffentlichungstag der Anmeldung: **02.04.2003**
(21) Anmeldenummer: 02102383.3
(22) Anmeldetag: 25.09.2002
(51) Int. Cl.: H04M 3/493

(54) **Vermittlungsverfahren zwischen Dialogsystemen**

(30) Priorität: 26.09.2001 DE 10147549
(71) Anmelder: Philips Corporate Intellectual Property GmbH, 20099 Hamburg (DE); Koninklijke Philips Electronics N.V., 5621 BA Eindhoven (NL)
(72) Erfinder: Breuer, Richard, 52088 Aachen (DE)
(74) Vertreter: Volmer, Georg, Dipl.-Ing.

(57) **Zusammenfassung**

Beschrieben wird ein Verfahren zur Vermittlung von einem Ausgangs-Dialogsystem (1), welches mit einem Nutzer unter Verwendung einer Spracherkennungs- und/oder Sprachausgabeeinrichtung (6) kommuniziert, zu einem Ziel-Dialogsystem (2), welches mit dem Nutzer ebenfalls unter Verwendung einer Spracherkennungs- und/oder Sprachausgabeeinrichtung (7) kommuniziert, wobei die Sprache der Spracherkennungsund/oder Sprachausgabeeinrichtung (7) des Ziel-Dialogsystems (2) einstellbar ist. Das Ausgangs-Dialogsystem (1) übersendet einen Sprachinformations-Parameter (P₂) an das Ziel-Dialogsystem (2), wodurch die Sprache angegeben wird, die das Ausgangs-Dialogsystem (1) zur Kommunikation mit dem Nutzer verwendet hat. Das Ziel-Dialogsystems (2) verwendet diesen Sprachinformations-Parameter (P₂) zur Einstellung der Sprache der Spracherkennungs- und/oder Sprachausgabeeinrichtung (7) für eine weitere Kommunikation mit dem Nutzer.

## Beschreibung

Die Erfindung betrifft ein Verfahren zur Vermittlung eines Nutzers von einem Ausgangs-Dialogsystem, welches mit dem Nutzer unter Verwendung einer Spracherkennungs- und/oder Sprachausgabeeinrichtung kommuniziert, zu einem Ziel-Dialogsystem, welches ebenfalls mit dem Nutzer unter Verwendung einer Spracherkennungs- und/oder Sprachausgabeeinrichtung kommuniziert. Dabei ist zumindest bei dem Ziel-Dialogsystem die Spracherkennungs- und/oder Sprachausgabeeinrichtung teilweise auf eine von mehreren Sprachen einstellbar. Darüber hinaus betrifft die Erfindung Dialogsysteme zur Durchführung dieses Verfahrens

Dialogsysteme, die mit einem Nutzer unter Verwendung von Spracherkennungs- und/oder Sprachausgabeeinrichtungen kommunizieren, sind bereits seit längerem bekannt. Es handelt sich hierbei um sprachgssteuerte, automatische Systeme, die oft auch als Voice-Portale bezeichnet werden. Ein Beispiel hierfür sind automatische Anrufbeantwortungs- und Auskunftssysteme, wie sie inzwischen beispielsweise von einigen größeren Firmen und Ämtern verwendet werden, um einen Anrufer möglichst schnell und komfortabel mit der gewünschten Information zu versorgen oder mit einer Stelle zu verbinden, welche für die speziellen Wünsche des Anrufers zuständig ist. Ein weiteres Beispiel hierfür ist eine automatische Telefonauskunft, wie sie bereits von einigen Telefongssellschaften eingesetzt wird.

Bei den Dialogsystemen kann es sich um Dialogsysteme handeln, welche allein über die Sprache mit dem Nutzer kommunizieren, das heißt, dass alle Daten sowie gegebenenfalls Eingabeaufforderungen an den Nutzer über eine geeignete Sprachausgabe, beispielsweise über einen TTS -Konverter (Text-to-Speech) oder durch Abspielen fertiger gespeicherter Sound-Dateien, ausgegeben werden. Der Nutzer muss sich zur Eingabe von Befehlen oder Daten wie Suchbegriffen etc. ebenfalls verbal äußern. Die Befehle bzw. Daten werden dann in einer Spracherkennungseinrichtung erkannt, so dass das System entsprechend darauf reagieren kann. Es kann sich aber auch um gemischte Dialogsysteme handeln, welche beispielsweise die Informationen nur über eine Sprachausgabeeinrichtung ausgeben, aber die Eingabe von Befehlen durch Tastendrücke, mit denen beispielsweise bei üblichen Telefonen sogenannte DTMF-Signale (Dual Tone Multi Frequency) erzeugt werden, akzeptieren.

Zwischen den einzelnen Dialogsystemen ist auch eine automatische Vermittlung möglich. So kann sich beispielsweise ein Nutzer einer automatischen Telefonauskunft direkt mit einer von der Telefonauskunft gsfundenen Nummer eines bestimmten Teilnehmers verbinden lassen. Handelt es sich hierbei um ein Unternehmen, welches ein entsprechendes automatisches Dialogsystem mit Spracherkennungs- und/oder Sprachausgabeeinrichtungen nutzt, so wird der Nutzer folglich von einem automatischen Dialogsystem an ein weiteres automatisches Dialogsystem weitergeleitet. Des Weiteren ist davon auszugehen, dass die nächsten Generationen von Dialogsystemen sogar die Navigation eines Anrufers von einem Dialogsystem zu einem anderen durch mehrere aufeinanderfolgende Verbindungen unterstützen. Mit steigender Anzahl der verwendeten Dialogsysteme und bei einem weiterem Ausbau der Vernetzung und der Standardisierung von Vermittlungen wird ein Nutzer daher in Zukunft die Möglichkeit haben, über ein Dialogsystem zu beginnen und sich von diesem Dialogsystem zu weiteren Dialogsystemen beliebig weiter vermitteln zu lassen. Dies ist vergleichbar mit dem heutigen "Surfen" im Internet über sogenannte Hyperlinks. Die einzelnen Dialogsysteme werden daher vielfach auch bereits analog zum Internet als Anwendung bzw. Voice- oder Sprach-Applikation bezeichnet. Die Begriffe werden daher im Folgenden ebenfalls synonym verwendet.

Da mehr und mehr unerfahrene Benutzer Zugriff zu solchen Applikationen haben, muss entsprechend mehr Wert auf die einfache und bequeme Benutzung der Applikationen gelegt werden. Dies gilt umso mehr bei Dialogsystemen, die über ein Telefon zu bedienen sind, da der Nutzerkreis auf Grund der Gewöhnung vieler Verbraucher an das Telefon noch größer sein wird und noch mehr unerfahrene Nutzer einschließen wird als beispielsweise das Internet. Die Applikationen werden dabei von den verschiedensten Herstellern und Providern angeboten und auch in den unterschiedlichsten Ländern und Sprachräumen installiert sein, wobei der Nutzer unter Umständen noch nicht einmal erfährt, wo das Dialogsystem, mit dem er aktuell kommuniziert, lokal angeordnet ist. Eine kritische Situation für einen Nutzer ist ein Wechsel der verwendeten Sprache von einem Dialogsystem zum nächsten Dialogsystem. Ein solcher Sprachwechsel kann beim Benutzer Verwirrung stiften und gegebenenfalls eine weitere Kommunikation sogar völlig unmöglich machen. Dieses Problem gilt im Prinzip zwar auch für Internetapplikationen. Bei einer akustischen Anwendung ist dieses Problem jedoch noch stärker als bei einer optischen, da keine Grafiken zur visuellen Unterstützung verfügbar sind. Um zu verhindern, dass der Nutzer mit dem "Ziel-Dialogsystem", zu dem er von dem "Ausgangs-Dialogsystem" aus vermittelt worden ist, in einer Sprache kommunizieren muss, welche er nicht versteht, könnte als erste Abfrage beim Ziel-Dialogsystem der Nutzer sofort aufgefordert werden, eine gewünschte Sprache einzugeben. Dies kann beispielsweise dadurch geschehen, dass über die Sprachausgabeeinrichtung die zur Verfügung stehenden Sprachen und jeweils eine zugehörige Taste angegeben werden, die der Benutzer drücken muss, um die betreffende Sprache auszuwählen. So könnte die Aufforderung "for English please press 1 - für Deutsch drücken Sie bitte die 2 - ... usw." in dieser oder ähnlicher Form ausgegeben werden und der Benutzer stellt dann durch Drücken der entsprechenden Taste des Telefons die richtige Sprache ein. Dies hat aber zum einen den Nachteil, dass der Benutzer jedes Mal, wenn er von einem Dialogsystem zu einem anderen weitergeleitet wird, die Sprache neu eingeben muss. Zum anderen kann es zu erheblichen Problemen kommen, wenn es sich beispielsweise um ein Dialogsystem in einem völlig fremden Sprachraum handelt, beispielsweise für einen europäischen Nutzer ein Dialogsystem im asiatischen Sprachraum. Es ist wahrscheinlich, dass zunächst eine Anzahl von Sprachen des fremden Sprachraums angeboten wird, wobei die jeweilige Aufforderung in den entsprechenden Sprachen erfolgt. Der Nutzer ist in diesem Fall gegebenenfalls noch nicht einmal in der Lage zu verstehen, dass es sich hierbei um einen Menüpunkt zur Einstellung der gewünschten Sprache handelt und wird unter Umständen die Verbindung abbrechen, bevor eine für ihn verständliche Sprache angeboten wird

Es ist daher Aufgabe der vorliegenden Erfindung ein Vermittlungsverfahren zwischen jeweils mit Spracherkennungs- und Sprachausgabeeinrichtungen arbeitenden Dialogsystemen anzugeben, mit welchem der Benutzer bequem und schnell von einem Dialogsystem zum anderen Dialogsystem weitergeleitet wird und die oben genannten Sprachprobleme vermieden werden.

Diese Aufgabe wird durch ein Verfahren gemäß Patentanspruch 1 sowie durch Dialogsysteme gemäß den Ansprüchen 10 und 11 gelöst. Die abhängigen Ansprüche betreffen besonders vorteilhafte Ausgestaltungen und Weiterbildungen der Erfindung.

Erfindungsgemäß wird bei der Vermittlung ein Sprachinformations-Parameter an das Ziel-Dialogsystem gesandt. Dieser Sprachinformations-Parameter gibt die Sprache an, in der die Kommunikation zwischen dem Nutzer und dem Ausgangs-Dialogsystem erfolgt ist. Der Sprachinformations-Parameter ist ein Signal, welches das Ziel-Dialogsystem dazu veranlasst, die Spracherkennungs- und/oder Sprachausgabeeinrichtung zur weiteren Kommunikation mit dem Nutzer auf eine geeignete Sprache, vorzugsweise dieselbe Sprache wie die des Ausgangs-Dialogsystems, einzustellen. Das heißt, die erste von einem Nutzer angerufene Applikation legt die Sprache einmal fest. Die Information über die verwendete Sprache wird dann an nachfolgende Applikationen weitergegeben, damit jede Applikakion dieselbe Sprache verwendet wie die vorherige. Sofern genau die Sprache, die der Nutzer zur Kommunikation mit dem Ausgangs-Dialogsystem verwendet hat, im Ziel-Dialogsystem nicht zur Verfügung steht, wird aus den vorhandenen Sprachen eine solche Sprache ausgewählt, die der vom Ausgangs-Dialogsystem verwendeten Sprache am ähnlichsten ist bzw. die ein Nutzer, welcher die durch den Sprachinformations-Parameter angegebene Sprache spricht, mit größter Wahrscheinlichkeit versteht. So könnte beispielsweise, wenn der Nutzer mit der Ausgangsapplikation in "Schwyzerdütsch" kommuniziert hat, im Ziel-Dialogsystem "Deutsch" eingestellt werden, wenn dort "Schwyzerdütsch" nicht zur Verfügung steht.

Die Einstellung der Sprache in der ersten Applikation kann auf beliebige Weise erfolgen. Beispielsweise kann der Nutzer eine Sprache in einem entsprechenden Menüpunkt des Dialogs auswählen. Eine weitere Möglichkeit ist, dass die erste angerufene Applikation anhand der Telefonnummer des Anrufers bzw. der Ländervorwahl eine Sprache auswählt. Ebenso sind auch Kombinationen der verschiedensten Verfahren möglich, so dass beispielsweise ein System zunächst mit einer Sprache entsprechend der Ländervorwahl des Anrufers beginnt und dann dem Anrufer ermöglicht, entweder diese Sprache beizubehalten oder eine andere Sprache zu wählen.

Sofern es sich bei der ersten Applikation um einen sogenannten personalisierten Dienst handelt, wie beispielsweise einen Dienst zur Verwaltung eines persönlichen Telefonbuchs, kann die vom Nutzer verwendete Sprache auch - nach entsprechender Einstellung bei der Einrichtung des Dienstes für den Nutzer - in einem dem Nutzer zugeordneten Profil gespeichert sein und von dort erfindungsgemäß an weitere Dienste übermittelt werden.

Der wesentliche Vorteil einer solchen automatischen Übergabe der Sprachinformation von einem Dialogsystem an das andere besteht darin, dass der Nutzer, ohne sich weiter darum zu kümmern, soweit möglich automatisch in der eingangs festgelegten Sprache oder einer ähnlichen Sprache, die der Nutzer versteht, mit dem aktuellen Dialogsystem kommunizieren kann. Ein aus mehreren Dialogsystemen bzw. Sprachapplikationen aufgebautes "Voice-Net" könnte daher ein Deutscher in Deutsch "browsen", während ein Engländer das "Voice-Net" in Englisch "browst" usw.

Das erfindungsgemäße Verfahren ist relativ einfach und kostengünstig realisierbar. Es ist lediglich erforderlich, dass die Übergabe des Sprachinformations-Parameters in der Weise erfolgt, dass die verschiedenen Dialogsysteme den Sprachinformations-Parameter erkennen und verstehen, das heißt es muss eine standardisierte Übergabe erfolgen, wobei der Standard von den Applikationen der verschiedenen Hersteller unterstützt werden muss.

Sinnvollerweise wird die Übergabe des Sprachinformations-Parameters in einen größeren Kontext eingebettet, der die Übergabe weiterer Informationen vom Ausgangs-Dialogsystem zum Ziel-Dialogsystem erlaubt. So könnten weitere Parameter übergeben werden, die den Nutzer und/oder die Verbindung zwischen dem Nutzer und dem Ausgangs-Dialogsystem charakterisieren. Hierzu können beispielsweise verschiedene Login-Informationen wie die Telefonnummer des Nutzers bzw. des Gerätes, von dem der Nutzer anruft, oder die lokale Uhrzeit des Ausgangs-Dialogsystems etc. zählen.

Insbesondere wenn mehrere Parameter übergeben werden, ist es sinnvoll, wenn bei einer Übersendung des Sprachinformations-Parameters ein Schlüsselcode an das Ziel-Dialogsystem übersandt wird, welcher angibt, dass ein Sprachinformations-Parameter übersandt wird und/oder in welcher Form dieser codiert ist. Bei einem bevorzugten Ausführungsbeispiel wird ein solcher Schlüsselcode unmittelbar vor dem Sprachinformations-Parameter selbst übermittelt, so dass das Ziel-Dialogsystem sofort erkennt, dass anschließend ein Sprachinformations-Parameter in einer bestimmten Form folgt, und diesen entsprechend bearbeitet. Ebenso können auch die anderen Parameter jeweils mit Schlüsselworten gekoppelt sein, welche den Typ des Parameters angeben. Die verschiedenen Parameter können gemeinsam mit den zugehörigen Schlüsselcodes in einem gemeinsamen Datenstring von dem Ausgangs-Dialogsystem an das Ziel-Dialogsystem übermittelt werden.

Für die Codierung des Sprachinformations-Parameters bietet sich an, ein bereits international standardisiertes Sprachkürzel zu verwenden. Eine Möglichkeit ist hierzu die Verwendung des Zwei-Zeichen-Codes für die Repräsentation der Namen von Sprachen, wie sie in der ISO 639 normiert sind. Die Registrierungsbehörde für die ISO 639 ist Infoterm, Österreicherisches Normungsinstitut (ON), Wien, Österreich.

Eine möglichst schnelle Kompatibilität zwischen den verschiedensten Applikationen - bei gleichzeitig geringem Aufwand bei der Realisierung des Verfahrens - kann erreicht werden, wenn der Sprachinformations-Parameter und gegebenenfalls die weiteren Parameter innerhalb eines zum Verbindungsaufbau zwischen dem Ausgangs-Dialogsystem und dem Ziel-Dialogsystem verwendeten Kommunikationsprotokolls an das Ziel-Dialogsystem gesandt werden.

Ein Kommunikationsprotokoll ist allgemein ein festgelegter Verfahrensablauf einschließlich der verwendeten Formate, wie die Kommunikation zwischen voneinander entfernten Stationen in einem Übertragungssystem erfolgt. In einem solchen Kommunikationsprotokoll zum Verbindungsaufbau sind daher beispielsweise die unterschiedlichen Formate und der Ablauf des Datenaustausches festgelegt, mit dem sich die verschiedenen Systeme beim Aufbau verständigen, wie z. B. der Austausch von Daten zur gegenseitigen Identifizierung und zur Synchronisierung aufeinander (sogenannte "Handshakes").

Je nach Art der Verbindung, beispielsweise einer Telefonverbindung oder einer Datenverbindung im Internet, gibt es dabei unterschiedliche festgelegte Protokolle.

Eine relativ elegante Variante ist hierbei die Übergabe der Information mit Hilfe eines Telefonie-Verbindungsprotokolls, das für den Aufbau der Telefonverbindung genutzt wird, beispielsweise das allgemein bekannte ISDN-Verbindungsprotokoll. In einem solchen Protokoll könnten der Sprachinformations-Parameter sowie gegebenenfalls die weiteren Parameter ähnlich der heute bereits stattfindenden Übergabe der Rufnummer des Anrufers behandelt werden. Hierzu sind lediglich geringe Änderungen innerhalb der bereits bestehenden Telefonie-Verbindungsprotokolle notwendig.

Alternativ ist es auch möglich, dass der Sprachinformations-Parameter - anstelle innerhalb eines Verbindungs-Protokolls - im Laufe einer bereits bestehenden Verbindung zwischen dem Ausgangs-Dialogsystem und dem Ziel-Dialogsystem innerhalb eines zum Datentransfer verwendeten Kommunikationsprotokolls übersandt wird. Diese Kommunikationsprotokolle hängen unter anderem davon ab, mit welcher Programmiersprache die beteiligten Applikationen implementiert werden bzw. welche Protokolle von den jeweiligen Programmiersprachen akzeptiert werden.

Bei einem weiteren bevorzugten Ausführungsbeispiel handelt es sich bei dem Kommunikationsprotokoll um das sogsnannte Internet-Protokoll (auch IP genannt) oder um ein auf dem Internet-Protokoll basierenden Protokoll, beispielsweise das CGI-Protokoll (Common Gateway Interface) oder das RPC-Protokoll (Remote Procedure Call), welche beide zum Datenaustausch während einer Verbindung genutzt werden. Eine weitere Möglichkeit ist die Nutzung des sogenannten VOIP (Voice Over Internet Protocol), welches zum Verbindungsaufbau einer Internetverbindung genutzt wird und eine Alternative zum ISDN-Verbindungsprotokoll bildet.

Die Verwendung solcher Kommunikationsprotokolle hat den Vorteil, dass bereits einige Standards existieren, die von den verschiedensten Applikationen unterstützt werden. So bietet beispielsweise die bereits zum Aufbau von vielen Sprach-Applikationen verwendete Programmiersprache Voice-XML (auch VXML genannt), welche ähnlich wie die zur Programmierung von Internetapplikationen verwendete HTML aufgebaut ist, die Möglichkeit, ein Ziel-Dialogsystem über eine aktive VXML-Seite mit Hilfe des CGI-Protokolls auf einem entfernten Server zu starten. Mit diesem CGI-Protokoll könnten Parameter an die Zielapplikation übergeben werden. Es müsste lediglich definiert festgelegt werden, in welcher Form und auf welche Weise der Sprachinformations-Parameter innerhalb des CGI-Protokolls übergeben wird. Der Nachteil der Verwendung des CGI-Protokolls im Gegensatz zu einem Telefonie-Verbindungsprotokoll besteht aber in der Beschränkung auf die verwendete Programmiersprache, das heißt hier auf Voice-XML.

Eine weitere Möglichkeit besteht darin, dass der Sprachinformations-Parameter und gegebenenfalls andere zu übertragende Parameter vom Ausgangs-Dialogsystem in einem Zwischenspeicher des verwendeten Kommunikationsnetzes hinterlegt werden. Hierbei kann es sich um einen beliebigen Speicher innerhalb des Netzes, z. B. einen zentralen Server wie einen Webserver, handeln, welcher eine entsprechende Einrichtung bzw. Schnittstelle zur Verfügung stellt, um dort den Sprachinformations-Parameter und gegebenenfalls die weiteren Parameter zu hinterlegen.

Der Sprachinformations-Parameter kann dort von einem Ziel-Dialogsystem abgerufen werden, wobei es auch möglich ist, dass innerhalb des Zwischenspeichers die Daten konvertiert werden, so dass auch eine Übergabe von Daten zwischen nichtkompatiblen Dialogsystemen möglich ist. Hierzu muss von dem Ausgangs-Dialogsystem an das Ziel-Dialogsystem lediglich eine Adresse übergeben werden, unter der sich das Ziel-Dialogsystem den Sprachinformations-Parameter abholen kann, oder es muss allgemein bekannt sein, an welcher Stelle ein Dialogsystem derartige Daten findet. Alternativ kann auch die Einrichtung im Netz, welche den Zwischenspeicher aufweist, von sich aus den Sprachinformations-Parameter in geeigneter Form an das Ziel-Dialogsystem übermitteln. In diesem Fall muß natürlich der Netzeinrichtung die Information übermittelt werden, an welches Ziel-Dialogsystem der Sprachinformations-Parameter weitergegeben werden soll.

Zur Ausführung des erfindungsgemäßen Verfahrens wird auf der einen Seite ein Dialogsystem mit Spracherkennungs- und/oder Sprachausgabeeinrichtung benötigt, welches Mittel zur Vermittlung des Nutzers zu einem Ziel-Dialogsystem aufweist und welches zusätzlich Mittel zur Übermittlung eines Sprachinformations-Parameters an das Ziel-Dialogsystem bei der Vermittlung aufweist. Hierbei kann es sich um Mittel handeln, die den Sprachinformations-Parameter wie beschrieben entweder direkt - beispielsweise unter Nutzung eines geeigneten Kommunikationsprotokolls - oder indirekt über einen im Netz angeordneten Zwischenspeicher übermitteln.

Auf der anderen Seite wird ein Dialogsystem benötigt, welches mit dem Nutzer unter Verwendung einer wahlweise auf eine von mehreren Sprachen einstellbaren Spracherkennungs- und/oder Sprachausgabeeinrichtung kommuniziert und welches Mittel zum Empfang des Sprachinformations-Parameters aufweist, sofern ein Nutzer von einem Ausgangs-Dialogsystem an dieses Dialogsystem vermittelt wird Zusätzlich muß das Dialogsystem Mittel aufweisen, um anhand des übermittelten Sprachinformations-Parameters automatisch für die Spracherkennungs- und/oder Sprachausgabeeinrichtung eine geeignete Sprache auszuwählen, damit die weitere Kommunikation mit dem Nutzer in dieser Sprache geführt wird.

Die Erfindung wird im Folgenden unter Hinweis auf die beigefügten Figuren anhand von Ausführungsbeispielen näher erläutert. Es zeigen:
Figur 1 eine schematische Darstellung des erfindungsgemäßen Verfahrens gemäß einem ersten Ausführungsbeispiel,
Figur 2 eine schematische Darstellung des erfindungsgemäßen Verfahrens gemäß einem zweiten Ausführungsbeispiel,
Figur 3 eine schematische Darstellung eines Datenstrings, innerhalb dessen ein Sprachinformations-Parameter von einem Dialogsystem zum anderen Dialogsystem übermittelt wird

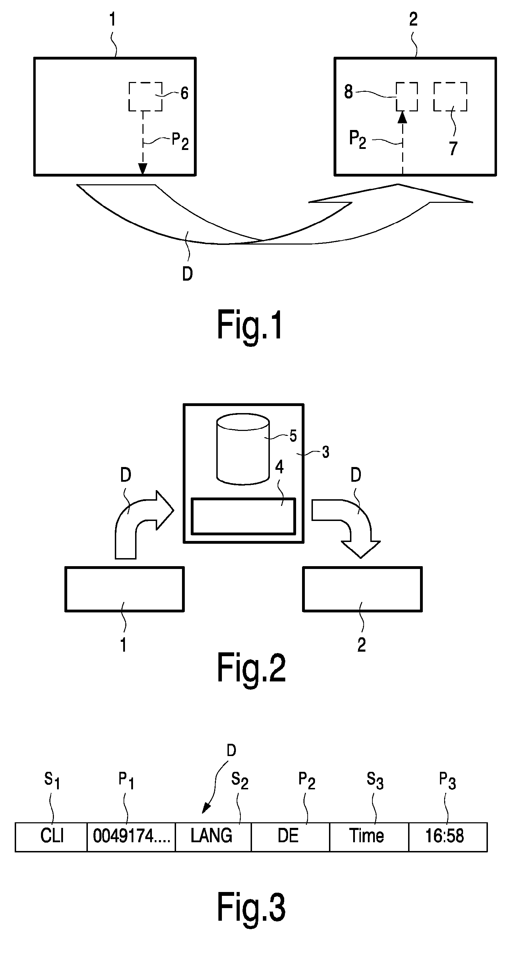

Bei dem Ausführungsbeispiel gemäß Figur 1 weist das erste Dialogsystem 1, welches hier genau wie das zweite Dialogsystem 2 der Einfachheit halber als Block dargestellt ist, eine Spracherkennungs- und/oder Sprachausgabeeinrichtung 6 auf, über die das Dialogsystem 1 mit dem Nutzer (nicht dargestellt) in einer bestimmten Sprache kommuniziert.

Innerhalb des Dialogs zwischen dem Nutzer und dem Dialogsystem 1 ergibt sich die Notwendigkeit, dass das Dialogsystem 1 als Ausgangs-Dialogsystem 1 den Nutzer an ein zweites Dialogsystem 2, das "Ziel-Dialogsystem" 2, vermitteln muss. Dieses Ziel-Dialogsystem 2 weist ebenfalls eine Spracherkennungs- und/oder Sprachausgabeeinrichtung 7 auf. Diese ist in der Lage, mit dem Nutzer unter Verwendung verschiedener Sprachen zu kommunizieren.

Bei den Dialogsystemen 1, 2 kann es sich um im Wesentlichen herkömmlich aufgebaute Dialogsysteme 1, 2 handeln, welche mit entsprechenden Kommunikationsanschlüssen, z. B. Telefonanschlüssen, mit denen der Nutzer mit dem Dialogsystem 1, 2 in Verbindung treten kann, ausgestattet sind. Die Dialogsysteme 1, 2 und auch die Spracherkennungs- und/oder Sprachausgabeeinrichtungen
6, 7 als Teile der Dialogsysteme 1, 2 können dabei zum überwiegenden Teil softwaremäßig auf den Servern als entsprechende Routinen installiert sein. Derartige Spracherkennungseinrichtungen und Sprachausgabeeinrichtungen sind dem Fachmann hinlänglich bekannt. Bei der Sprachausgabeeinrichtung kann es sich beispielsweise um ein TTS-System (Text-to-Speech) handeln, welches innerhalb des Dialogsystems auftretende Informationen, beispielsweise Suchergebnisse oder Eingabeaufforderungen etc., maschinell in Sprache übersetzt. Es kann sich aber auch um vorgefertigte Sound-Dateien handeln, die entsprechend vom System zu Ausgabe an den jeweiligen Nutzer aufgerufen werden. Der verwendete Typ der Spracherkennungs- und/oder Sprachausgabeeinrichtung ist für die Erfindung selbst unerheblich. Wesentlich ist lediglich, dass zumindest beim Ziel-Dialogsystem 2 die Möglichkeit besteht, eine von mehreren Sprachen auszuwählen.

Selbstverständlich ist es auch möglich, dass das Ziel-Dialogsystem ebenfalls in der Lage ist, in mehreren Sprachen zu kommunizieren, wobei eine Sprache ausgewählt werden kann. Es ist ebenso selbstverständlich, dass bei einer weiteren Vermittlung auch das in Figur 1 dargestellte Ziel-Dialogsystem 2 wieder selbst als Ausgangs-Dialogsystem bei einer Vermittlung an ein weiteres Dialogsystem dienen kann oder dass das in Figur 1 dargestellte Ziel-Dialogsystem 2 den Nutzer an das ursprüngliche Ausgangs-Dialogsystem 1 zurückvermittelt und bezüglich dieser Zurückvermittlung als Ausgangs-Dialogsystem anzusehen ist, wobei das ursprüngliche Ausgangs-Dialogsystem dann das Ziel-Dialogsystem bildet.

In dem in Figur 1 dargestellten Beispiel weist das Ziel-Dialogsystem 2 erfindungsgemäß außerdem eine Einrichtung 8 auf, mit der unter Verwendung eines vom Ausgangs-Dialogsystem 1 übersandten Sprachinformations-Parameters die Sprache der Spracherkennungs- und Sprachausgabeeinrichtung 7 ausgewählt wird. Dies kann durch eine geeignete Schaltung oder durch eine Softwareroutine innerhalb des Dialogsystems 2 realisiert werden.

Bei einer Vermittlung eines Nutzers wird vom Ausgangs-Dialogsystem 1 an das Ziel-Dialogsystem 2 ein Datenstring D übergeben. Dieser Datenstring D enthält unter anderem den Sprachinformations-Parameter P₂. Dieser Sprachinformations-Parameter P₂ wird innerhalb des Ziel-Dialogsystems 2 an die Einrichtung 8 weitergeleitet, welche anhand des Sprachinformations-Parameters P₂ erkennt, in welcher Sprache das Ausgangs-Dialogsystem 1 mit dem Nutzer kommuniziert hat. Dementsprechend wird von der Einrichtung 8 die Spracherkennungs- und Sprachausgabeeinrichtung 7 automatisch auf eine geeignete - vorzugsweise dieselbe - Sprache eingestellt.

Figur 2 zeigt ein alternatives Ausführungsbeispiel, bei dem vom Ausgangs-Dialogsystem 1 der Datenstring D zunächst an einen Pufferspeicher 4 weitergeleitet wird, welcher sich auf einem zentralen Server 3 innerhalb des Kommunikationsnetzes befindet. Vom Server 3 wird der Datenstring D dann zum Ziel-Dialogsystem 2 weitergeleitet, bzw. das Ziel-Dialogsystem 2 ruft die Daten beim Server 3 ab. Der Server 3 enthält außerdem einen Speicher 5, in dem weitere allgemeine Daten gespeichert sind, sowie eine geeignete Einrichtung, beispielsweise eine Softwareapplikation, um den vom Ausgangs-Dialogsystem 1 gesendeten Datenstring an das gewünschte Ziel-Dialogsystem 2 auszugeben bzw. weiterzuleiten. Der Server 3 kann auch so eingerichtet werden, dass der Datenstring D innerhalb des Servers 3 zuvor bearbeitet wird, beispielsweise von einem Format in ein anderes Format konvertiert wird, um einen Austausch der Daten zwischen zwei nicht kompatiblen Dialogsystemen zu ermöglichen. Die notwendigen Daten hierzu können beispielsweise in dem Speicher 5 hinterlegt sein.

Figur 3 zeigt ein typisches Ausführungsbeispiel für einen Datenstring D, welcher vom Ausgangs-Dialogsystem 1 zum Ziel-Dialogsystem 2 übermittelt wird. Dieser Datenstring D enthält nicht nur den Sprachinformations-Parameter 2, sondern auch weitere Parameter P₁, P₃, welche das Ziel-Dialogsystem 2 gegebenenfalls für den weiteren Dialog mit dem Nutzer verwenden kann.

Vor die einzelnen Parameter P₁, P₂, P₃ sind jeweils Schlüsselcodes S₁, S₂, S₃ innerhalb des Datenstrings D angeordnet, welche den Typ der nachfolgenden Parameter definieren. Damit besteht ein Datenstring aus einer Folge von definierten Schlüsselworten und nachfolgenden Werten.

In dem dargestellten Ausführungsbeispiel steht an erster Stelle als Schlüsselcode das Kürzel "CLI", welches vom Empfänger als "Calling Line ID" erkannt wird. Dies bedeutet, dass nach dem ersten Schlüsselcode S₁ eine Telefonnummer T₁ des aktuellen Anrufers folgt. Hier enthält diese Telefonnummer T₁ auch die allgemeine Länderkennziffer, so dass das Ziel-Dialogsystem 2 erkennen kann, von welchem Staat aus der Nutzer anruft. Daran schließt sich der Schlüsselcode "Lang" an, welcher als Abkürzung für "Language" darauf hinweist, dass nun als weiterer Parameter P₂ der Sprachinformations-Parameter P₂ folgt. In dem in Figur 3 dargestellten Ausführungsbeispiel steht als Sprachinformations-Parameter P₂ das Kürzel "DE", welches nach ISO 639 bedeutet, dass die verwendete Sprache Deutsch ist. Nach dieser Norm ist beispielsweise das Kürzel für Englisch "EN", für Französisch "FR", für Italien "IT" usw. An den Sprachinformations-Parameter P₂ schließt sich dann der Schlüsselcode "Time" S₃ an, wodurch das Ziel-Dialogsystem darüber informiert wird, dass nachfolgend die lokale Uhrzeit P₃ des Aufrufs der Ursprungsapplikation übergeben wird

Dieses Verfahren ermöglicht folglich nicht nur die Übergabe des Sprachinformations-Parameters und somit einen problemlosen Übergang von einem Dialogsystem an ein anderes Dialogsystem, ohne dass für den Nutzer Sprachprobleme auftreten, sondern es können auch weitere sinnvolle Informationen übergeben werden, die das Ziel-Dialogsystem wiederum verwenden kann, um den Nutzer optimal zu bedienen. So kann beispielsweise durch Übertragung der Rufnummer der Standort des Nutzers bestimmt werden, und dementsprechend können länderspezifisch zielgerichtet Informationen an den Nutzer herausgegeben werden.

## Patentansprüche

1. Verfahren zur Vermittlung eines Nutzers von einem Ausgangs-Dialogsystem (1), welches mit dem Nutzer unter Verwendung einer Spracherkennungs- und/oder Sprachausgabeeinrichtung (6) kommuniziert, zu einem Ziel-Dialogsystem (2), welches mit dem Nutzer unter Verwendung einer wahlweise auf eine von mehreren Sprachen einstellbaren Spracherkennungs- und/oder Sprachausgabeeinrichtung (7) kommuniziert,
**dadurch gekennzeichnet,**
**dass** bei der Vermittlung ein Sprachinformations-Parameter (P₂) an das Ziel-Dialogsystem (2) übersandt wird, welcher eine Sprache repräsentiert, in der die Kommunikation zwischen dem Nutzer und dem Ausgangs-Dialogsystem (1) erfolgt ist, und unter Verwendung dieses Sprachinformations-Parameters automatisch die Spracherkennungs- und/oder Sprachausgabeeinrichtung (7) des Ziel-Dialogsystems (2) auf eine geeignete Sprache zur Kommunikation mit dem Nutzer eingestellt wird.

2. Verfahren nach Anspruch 1,
**dadurch gekennzeichnet,**
**dass** gemeinsam mit dem Sprachinformations-Parameter (P₂) zumindest ein weiterer den Nutzer und/oder eine Verbindung zwischen dem Nutzer und dem Ausgangs-Dialogsystem (1) charakterisierender Parameter (P₁, P₂) an das Ziel-Dialogsystem übermittelt wird.

3. Verfahren nach Anspruch 1 oder 2,
**dadurch gekennzeichnet,**
**dass** bei einer Übersendung des Sprachinformations-Parameters (P₂) ein Schlüsselcode (S₂) an das Ziel-Dialogsystem (2) übersandt wird, welcher angibt, dass ein Sprachinformations-Parameter (P₂) übersandt wird und/oder in welcher Form der Sprachinformations-Parameter (P₂) codiert ist.

4. Verfahren nach einem der Ansprüche 1 bis 3,
**dadurch gekennzeichnet,**
**dass** der Sprachinformations-Parameter innerhalb eines zum Verbindungsaufbau zwischen dem Ausgangs-Dialogsystem und dem Ziel-Dialogsystem verwendeten Kommunikationsprotokolls an das Ziel-Dialogsystem gesandt wird.

5. Verfahren nach Anspruch 4,
**dadurch gekennzeichnet,**
**dass** das Kommunikationsprotokoll ein Telefonie-Verbindungsprotokoll ist.

6. Verfahren nach einem der Ansprüche 1 bis 3,
**dadurch gekennzeichnet,**
**dass** der Sprachinformations-Parameter innerhalb eines zum Datentransfer während einer bestehenden Verbindung zwischen dem Ausgangs-Dialogsystem und dem Ziel-Dialogsystem verwendeten Kommunikationsprotokolls an das Ziel-Dialogsystem gesandt wird.

7. Verfahren nach Anspruch 4 oder 6,
**dadurch gekennzeichnet,**
**dass** das Kommunikationsprotokoll ein Internet-Protokoll oder ein auf einem Internet-Protokoll basierendes Protokoll ist.

8. Verfahren nach einem der Ansprüche 1 bis 3,
**dadurch gekennzeichnet,**
**dass** der Sprachinformations-Parameter (P₂) auf einem Zwischenspeicher (4) eines Kommunikationsnetzes vom Ausgangs-Dialogsystem (1) hinterlegt und von dort an das Ziel-Dialogsystem (2) übermittelt wird.

9. Verfahren nach einem der Ansprüche 1 bis 8,
**dadurch gekennzeichnet,**
**dass** der Sprachinformations-Parameter (P₂) in Form eines international standardisierten Codes übersandt wird.

10. Dialogsystem (1) zur Durchführung nach einem der Ansprüche 1 bis 9, welches mit dem Nutzer unter Verwendung einer Spracherkennungs- und/oder Sprachausgabeeinrichtung kommuniziert, mit Mitteln zur Vermittlung des Nutzers an ein Ziel-Dialogsystem (2),
**gekennzeichnet durch**
Mittel zur Übermittlung eines Sprachinformations-Parameters (P₂) an das Ziel-Dialogsystem (2) bei der Vermittlung, wobei der Sprachinformations-Parameter (P₂) eine Sprache repräsentiert, in der die Kommunikation zwischen dem Nutzer und dem Dialogsystem (1) erfolgt ist.

11. Dialogsystem (2) zur Durchführung eines Verfahrens nach einem der Ansprüche 1 bis 9, welches mit dem Nutzer unter Verwendung einer wahlweise auf eine von mehreren Sprachen einstellbaren Spracherkennungs- und/oder Sprachausgabeeinrichtung (7) kommuniziert,
**gekennzeichnet durch**
Mittel zum Empfang eines Sprachinformations-Parameters (P₂) bei einer Vermittlung eines Nutzers von einem Ausgangs-Dialogsystem (1) an das Dialogsystem (2), wobei der Sprachinformations-Parameter (P₂) eine Sprache repräsentiert, in der die Kommunikation zwischen dem Nutzer und dem Ausgangs-Dialogsystem (1) erfolgt ist, und Mittel (8) zum automatischen Einstellen der Spracherkennungs- und/oder Sprachausgabeeinrichtung (7) des Dialogsystems (2) auf eine geeignete Sprache zur Kommunikation mit dem betreffenden Nutzer unter Verwendung des Sprachinformations-Parameters (P₂).
